# EUROPEAN PATENT APPLICATION

(11) **EP 2 684 709 A1**
(43) Date of publication of application: **15.01.2014**
(21) Application number: 12755522.5
(22) Date of filing: 06.03.2012
(51) Int. Cl.: B60B 27/00, B21K 1/05, B60B 35/02, F16C 3/02, F16C 19/18

(54) **SHAFT MEMBER FOR ROLLING BEARING DEVICE FOR WHEEL**

(30) Priority: 07.03.2011 JP 2011048906
(71) Applicant: JTEKT Corporation, Osaka-shi, Osaka 542-8502 (JP)
(72) Inventor: NAKAO, Motonori, Osaka-shi Osaka 542-8502 (JP)
(74) Representative: Winter, Brandl, Fürniss, Hübner, Röss, Kaiser, Polte - Partnerschaft
(86) International application number: PCT/JP2012/055672
(87) International publication number: WO 2012/121245

(57) **Abstract**

A shaft member of a rolling bearing device for a wheel includes a shaft portion, a flange base portion, and a fitting shaft portion. A plurality of flange portions which extend radially outwards in a radial direction is formed on the flange base portion. Projecting portions which are webbed-shaped and project radially outwards are formed circumferentially on an outer circumferential surface of the flange base portion between the adjacent flange portions.

## Description

### TECHNICAL FIELD

The present invention relates to a shaft member of a rolling bearing device for a wheel which is used in a rolling bearing device for a wheel.

### BACKGROUND ART

For example, Patent Documents 1 and 2 disclose a rolling bearing device for a wheel (a so-called hub unit for a wheel) in which an outer ring, an inner ring and rolling elements are assembled onto a shaft member of a rolling bearing device for a wheel and a method for producing the rolling bearing device.

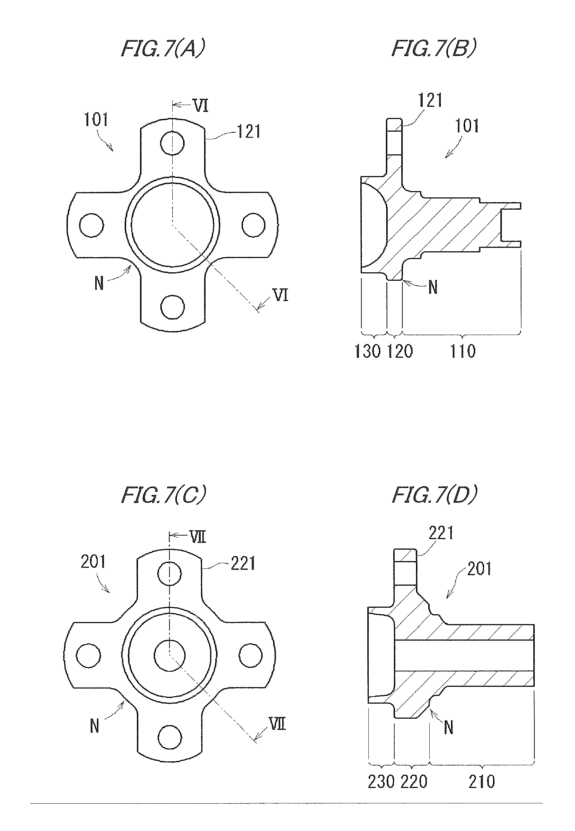

In a shaft member 101 (a hub wheel) of the rolling bearing device which is used in the rolling bearing device disclosed in Patent Document 1, as shown in Fig. 7(A) and 7(B), a substantially cylindrical shaft portion 110, a cylindrical flange base portion 120 which is larger in diameter than the shaft portion 110 and a cylindrical fitting shaft portion 130 which is substantially equal to or smaller in diameter than the flange base portion 120 are formed integrally and coaxially with each other. In addition, a plurality of flange portions 121 are provided at the flange base portion 120 so as to extend radially outwards in a radial direction. Fig. 7(B) is a sectional view taken along the line VI-VI in Fig. 7(A).

In addition, in the shaft member 201 (a hub wheel) of the rolling bearing device which is uses in the rolling bearing device disclosed in Patent Document 2, as shown in Fig. 7(C) and 7(D), a substantially cylindrical shaft portion 210, a cylindrical flange base portion 220 which is larger in diameter than the shaft portion 210 and a cylindrical fitting shaft portion 230 which is substantially equal to or smaller in diameter than the flange base portion 220 are formed integrally and coaxially with each other. In addition, a plurality of flange portions 221 are provided at the flange base portion 220 so as to extend radially outwards in a radial direction. Fig. 7(D) is a sectional view taken along the line VII-VII in Fig. 7(C).

### Related Art Documents

### Patent Documents

Patent Document 1: JP-A-2006-111070
Patent Document 2: JP-A-2008-194741

### SUMMARY OF INTENTION

### Problem that the Invention is to Solve

In either of the related art techniques described in Patent Documents 1 and 2 (Figs. 7(A) and 7(B), and Figs. 7(C) and 7(D)), although the plurality of flange portions (121, 221) are formed on an outer circumferential surface of the flange base portion (120, 220), in the flange portions which extend radially outwards in the radial direction, no rib is formed between the adjacent flange portions. Therefore, it is possible that the rigidity and strength of the flange portions become insufficient.

In addition, in either of the shaft members (101, 201), when the shaft member (101, 201) is formed by the use of a forward extrusion and sideways extrusion processes, the flow of a material is interrupted at a boundary portion N between the flange base portion (120, 220) and the shaft portion (110, 210), whereby stress tends to easily concentrate to the boundary portion N. Thus, when a cold forging is carried out, it is possible that the life of a mold concerned becomes short.

The invention has been made in view of these drawbacks, and a problem the invention is to solve is how to provide a shaft member of a rolling bearing device for a wheel which can increase the rigidity and strength of flange portions and a shaft member of a rolling bearing device for a wheel which can disperse stress applied by a material in a cold forging step so as to extend the life of a mold concerned.

### Means for Solving the Problem

With a view to solving the problem, a shaft member of a rolling bearing device for a wheel according to an aspect of the invention adopts the following means.

In accordance with a first aspect of the invention, a shaft member for a rolling bearing device for a wheel is provided with: a shaft portion which is substantially cylindrical and on an outer circumferential surface of which an inner ring raceway surface is formed; a flange base portion which is substantially cylindrical and formed at one end side of the shaft portion so as to be concentric with a rotational axis of the shaft portion, wherein the flange base portion is larger in diameter than a diameter of the shaft portion; a fitting shaft portion which is substantially cylindrical and formed on a side of the flange base portion which is opposite to the shaft portion so as to be concentric with the rotational axis of the shaft portion, wherein the fitting shaft portion is substantially equal in diameter to the flange base portion or smaller in diameter than the flange base portion; a plurality of flange portions which extend radially outwards in a radial direction from the flange base portion; and projecting portions which are webbed-shaped and formed circumferentially on an outer circumferential surface of the flange base portion in positions between the adjacent flange portions so as to project radially outwards from the outer circumferential surface of the flange base portion.

According to the first aspect of the invention, the rigidity and the strength of the flange portions can be increased by forming the webbed-shaped projecting portions circumferentially in the positions between the adjacent flange portions.

### BRIEF DESCRIPTION OF DRAWINGS

Fig. 1 is an axial sectional view showing a state in which a shaft member 1 of a rolling bearing device for a wheel, an inner ring 42, an outer ring 45, first rolling elements 50 and second rolling elements 51 are assembled together as a rolling bearing device A for a wheel (a sectional view taken along a rotational axis of a shaft portion 10).
Fig. 2(A) is a view of the shaft member 1 (with projecting portions M) shown in Fig. 1 as seen from a direction B, and Fig. 2(B) is a view of an example of a conventional shaft member 102 of a rolling bearing device for wheel having no projecting portion M.
Fig. 3(A) is a perspective view of the shaft member 1, and Fig. 3(B) is a view of the shaft member 1 as seen from a direction which is at right angles to an axial direction thereof.
Fig. 4 is an axial sectional view of the device shaft member 1 (a sectional view taken along the rotational axis of the shaft portion 10).
Figs. 5(A) to 5(H) show a change in shape of a shaft-shaped material 60 over steps (A) to (H) of forming the shaft member from a material.

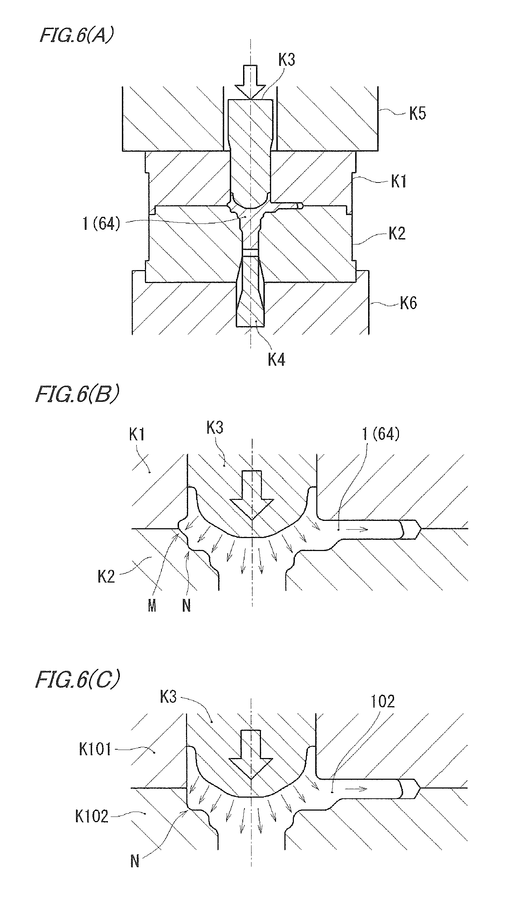

Fig. 6(A) is an explanatory diagram illustrating an example in which a secondary cold-forged part 64 is formed by a cold forging sideways extrusion process which employs a first mold K1 to a sixth mold K6, Fig. 6(B) is an enlarged view of the vicinity of a recess portion which is formed in the first mold K1 and the second mold K2 shown in Fig. 6(A) so as to correspond to a projecting portion M, and Fig. 6(C) is an enlarged view showing an example, contrasting with the example shown in Fig. 6(B), in which a conventional first mold K101 and second mold K102 are used in which a recess portion corresponding to a projecting portion M is not formed.
Figs. 7(A) and 7(B) are explanatory diagrams illustrating a conventional shaft member 101 of a rolling bearing device (a first example), and Figs. 7(C) and 7(D) are explanatory diagrams illustrating a conventional shaft member 201 of a rolling bearing device (a second example).

### DESCRIPTION OF EMBODIMENTS

A mode for carrying out the invention will be described by the use of the drawings.

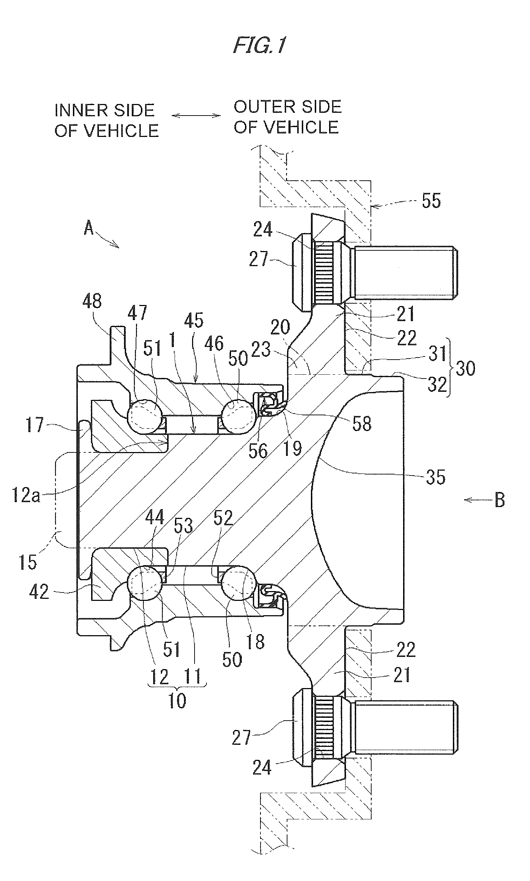

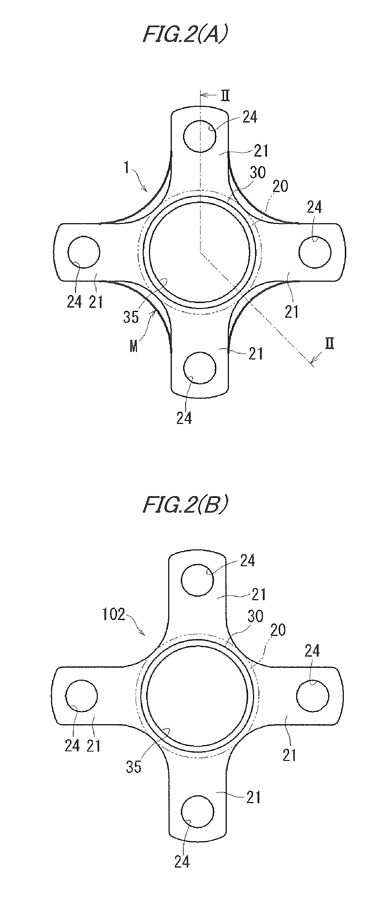

### <Overall Construction (Fig. 1) of Rolling bearing device A for a wheel, and Overall Construction (Figs. 2 to 4) of Shaft Member 1 of Rolling bearing device>

Fig. 1 shows an axial sectional view (a sectional view taken along a rotational axis of a shaft portion 10) of a rolling bearing device A for a wheel which employs a shaft member 1 of a rolling bearing device for a wheel according to an embodiment of the invention, Fig. 2(A) shows a view of the shaft member 1 (with projecting portions M) of the embodiment as seen from a direction B shown in Fig. 1, and Fig. 2(B) shows an example of a conventional shaft member 102 of a rolling bearing device for a wheel having no projecting portion M in contrast to the shaft member 1 shown in Fig. 2(A).

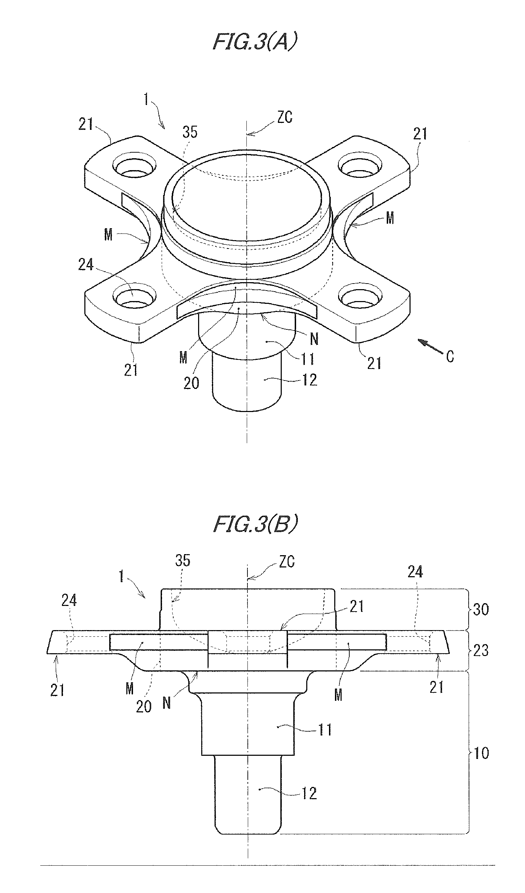

Additionally, Fig. 3(A) shows a perspective view of the shaft member 1 of the embodiment, and Fig. 3(B) shows a view of the shaft member 1 shown in Fig. 3(A) as seen from a direction C (a view seen from a direction which is at right angles to an axial direction).

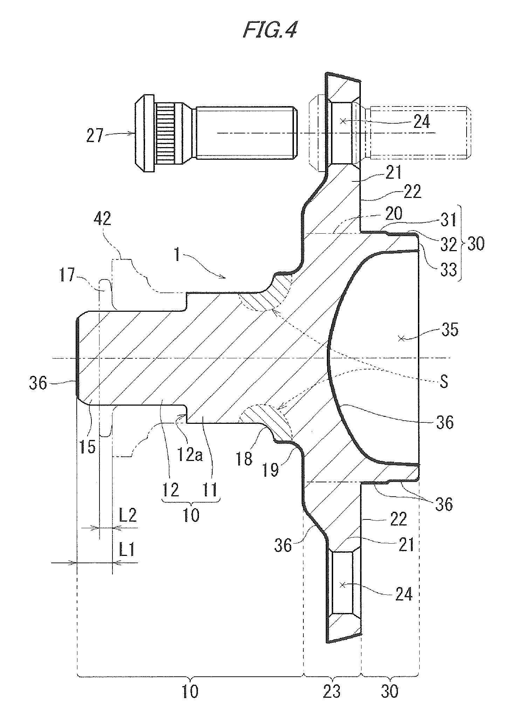

In addition, Fig. 4 shows an axial sectional view of the shaft member 1 of the embodiment.

Next, an overall construction of the rolling bearing device A will be described by the use of Fig. 1, and an overall construction of the shaft member 1 will be described by the use of Figs. 2 to 4.

As shown in Fig. 1, in the rolling bearing device A (a so-called wheel hub unit), an inner ring 42, an outer ring 45, a plurality of first rolling elements 50 and a plurality of second rolling elements 51 are assembled onto the device shaft member 1.

It is noted that when the rolling bearing device A is mounted in a vehicle, a shaft portion 10 is situated on an inboard side of the vehicle, and a fitting shaft portion 30 is situated on an outboard side of the vehicle. On a sheet of paper on which Fig. 1 is drawn, a leftward direction represents the inboard side of the vehicle, while a rightward direction on the sheet of paper represents the outboard side of the vehicle.

As shown in Figs. 3 and 4, the shaft member 1 (a so-called hub wheel) has the shaft portion 10, an intermediate shaft portion 23 and the fitting shaft portion 30 which are integrated into one unit. It is noted that the intermediate shaft portion 23 includes a flange base portion 20 and flange portions 21.

The shaft portion 10 has a cylindrical shape. A large-diameter shaft portion 11 having a large diameter is formed on a side of the shaft portion 10 which lies closer to the flange portions, and a small-diameter portion 12 having a smaller diameter than that of the large-diameter shaft portion 11 is formed at an end portion which lies far from the flange portions 21. An inner ring abutment surface 12a, which is a surface intersecting a rotational axis of the shaft portion 10 at right angles, is formed on a step portion between the large-diameter shaft portion 11 and the small-diameter shaft portion 12.

The flange base portion 20 is situated between the shaft portion 10 and the fitting shaft portion 30, which will be described later. The flange portion 20 is formed at one end side of the shaft portion 10 concentrically with the rotational axis of the shaft portion 10. The flange portion 20 has a substantially cylindrical shape having a diameter larger than the diameter of the shaft portion 10. The flange portions 21 (refer to Figs. 2(A), 3) is formed on an outer circumferential surface of the flange base portion 20 so as to extend therefrom radially outwards in a radial direction, and wheel fastening bolt holes 24 are formed individually in the flange portions 21. Then, the flange base portion 20 and the flange portions 21 make up the intermediate shaft portion 23.

In addition, as shown in Figs. 2(A), 3(A) and 3(B), webbed-shaped projecting portions M which project radially outwards are formed on the outer circumferential surface of the flange base portion 20 in positions lying between the adjacent flange portions. When seen in the direction of the rotational axis ZC of the shaft portion 10, the projecting portions M are formed in a position which is deviated from a boundary portion N between the shaft portion 10 and the flange base portion 20 and which is situated closer to the fitting shaft portion 30 than the boundary portion N.

It is noted that a thickness of the projecting portions M in the direction of the rotational axis ZC is thinner than a thickness of the flange portions 21 in the direction of the rotational axis ZC. Additionally, the projecting portions M are so-called ribs intended to enhance the rigidity of the flange portions 21 which extend radially outwards and are formed so as not to project towards a side of the flange portions 21 which faces the fitting shaft portion 30.

In addition, in the example shown in Figs. 2(A), 3(A), an outer circumferential surface of the projecting portion M has a crescent shape which is curved concavely towards a radially outward direction. However, the outer circumferential surface may be straight-line without being so curved. Additionally, the thickness of the projecting portions M in the direction of the rotational axis ZC may not be constant.

The fitting shaft portion 30 is formed at one end side of the flange base portion 20 (a side opposite to the shaft portion 10) concentrically with the rotational axis of the shaft portion 10 and has a substantially cylindrical shape which is not interrupted circumferentially, and a center bore of a wheel (whose illustration is omitted) is fitted on the fitting shaft portion 30.

It is noted that while in this embodiment, the shaft member having the flange portions 21 which are shaped to extend radially outwards in a radial direction as shown in Fig. 2(A) (and Fig. 3(A)) will be described hereinbelow, the number of flange portions 21 is not limited to four.

In addition, the bolt holes 24 are provided individually in the flange portions 21 so as to penetrate therethrough so that hub bolts 27 which fasten the wheel are disposed therein through press fitting.

Additionally, a brake rotor fitting portion 31 is formed on a side of the fitting shaft portion 30 which faces the flange portions 21 so as to be fitted in a center bore of a brake rotor 55 (refer to Fig. 1), and a wheel fitting portion 32 is formed on a distal end side thereof which is slightly smaller in diameter than the brake rotor fitting portion 31.

Further, a peripheral surface of the center bore of the brake rotor 55 is brought into abutment with rotor supporting surfaces 22 which are surfaces of the flange portions 21 which lie to face the fitting shaft portion 30, as shown in Fig. 1.

In addition, as shown in Fig. 3(B), in the shaft member 1, the fitting shaft portion 30, the intermediate shaft portion 23 and the shaft portion 10 are formed coaxially along the direction of the rotational axis.

Additionally, a forged recess portion 35 which is concave is formed on an inside diameter side of the fitting shaft portion 30.

A first inner ring raceway surface 18, which makes up one of bearing portions of a double row angular ball bearing as a rolling bearing, is formed so as to continue circumferentially on an outer circumferential surface of part of the large-diameter portion 11 of the shaft portion 10 of the shaft member 1 described in this embodiment which is situated in the vicinity of a boundary portion with the flange portions 21 (the flange base portion 20).

In addition, a seal surface 19 (an adjacent outer circumferential surface), which will be described later, is formed on an outer circumferential surface of another part of the large-diameter portion 11 which is situated adjacent to the first inner ring raceway surface 18 and closer to a side thereof which faces the flange portions 21 so as to extend continuously in a circumferential direction.

Additionally, the inner ring 42 is fitted on an outer circumferential surface of the small-diameter shaft portion 12, the inner ring 42 having a second inner ring raceway surface 44 formed on an outer circumferential surface thereof so as to extend continuously in the circumferential direction. It is noted that the inner ring 42 is so fitted until the inner ring 42 comes into abutment with the inner ring abutment surface 12a.

Then, a projecting portion (a shaft end portion 15 shown in Fig. 1) of the small-diameter portion 12 which projects from the inner ring 42 is crimped radially outwards so as to form a crimped portion 17, whereby the inner ring 42 is fixed in place by the crimped portion 17 and the inner ring abutment surface 12a.

The outer ring 45 is disposed on the outer circumferential surface of the shaft portion 10 of the shaft member 1 with an annular space defined therebetween.

A first outer ring raceway surface 46, which faces the first inner ring raceway surface 18 formed on the shaft member 1, and a second outer ring raceway surface 47, which faces the second inner ring raceway surface 44 formed on the inner ring 42, are formed on an inner circumferential surface of the outer ring 45. It is noted that the inner ring raceway surfaces and the outer ring raceway surfaces are individually formed into a surface which extends continuously in the circumferential direction.

In addition, the plurality of first rolling elements 50 are held and disposed so as to roll individually between the first inner ring raceway surface 18 and the first outer ring raceway surface 46 by a cage 52, while the plurality of second rolling elements 51 are held and disposed so as to roll individually between the second inner ring raceway surface 44 and the second outer ring raceway surface 47 by a cage 53.

An axial preload is imparted to the plurality of first rolling elements 50 and the plurality of second rolling elements 51 based on a crimping force by which the end portion of the small-diameter shaft portion 12 is crimped to form the crimped portion 17 to thereby make up the angular ball bearing.

A vehicle-body-side flange 48 is formed integrally on an outer circumferential surface of the outer ring 45, and this vehicle-body-side flange is fastened to a mounting surface of a vehicle-body-side member such as a knuckle or a carrier which is supported on a suspension system (whose illustration is omitted) of the vehicle with bolts.

In addition, a seal member 56 is press fitted and assembled to an inner circumferential surface of an opening portion in the outer ring 45 which lies adjacent to the first outer ring raceway surface 46, and a distal end of a lip 58 of the seal member 56 is brought into sliding contact (contact) with the seal surface 19 so as to seal up a gap defined between the outer ring 45 and the shaft member 1.

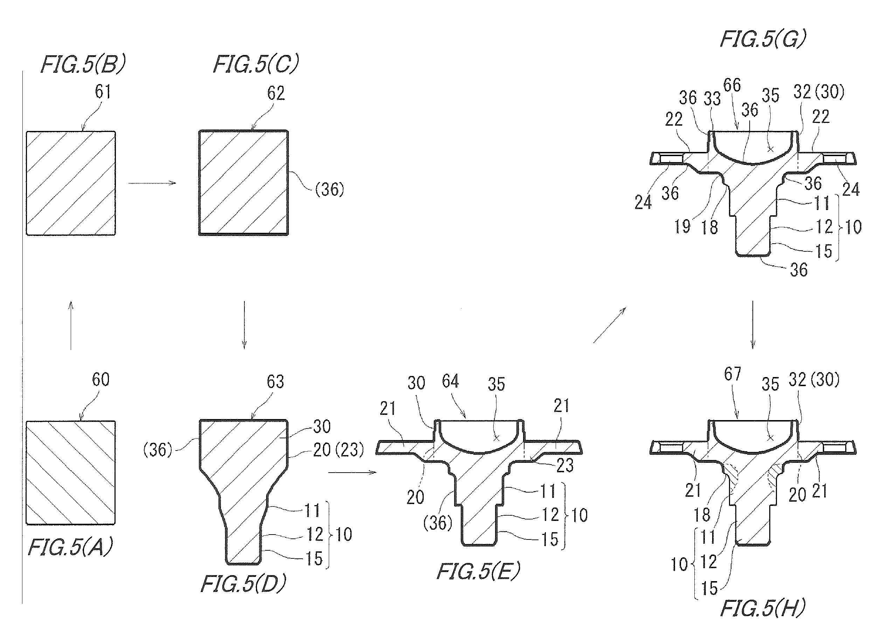

### <Production Method of Shaft Member 1 (Fig. 5) and Production Method of Rolling bearing device A>

Next, a production method of the shaft member 1 will be described by the use of Fig. 5.

Figs. 5(A) to 5(H) show how to form the shaft member 1 from a rod-shaped material 60 through various steps.

The shaft member 1 described in this embodiment is produced through an annealing treatment step, a coating treatment step, a cold forging step, a cutting step, a heat treatment step and a polishing step.

Firstly, before the annealing treatment step, a substantially cylindrical structural carbon steel material containing on the order of 0.5% carbon such as S45C, S50C, or S55C is cut to a predetermined length so as to form a shaft-shaped material 60 (refer to Fig. 5(A)).

### <1. Annealing treatment step (Fig. 5(B))>

In the annealing treatment step, the shaft-shaped material 60 is heated at a temperature which is equal to or higher than a transformation temperature (preferably a temperature which is higher by on the order of 20°C to 70°C than the transformation temperature).

By doing so, a content of carbon in the shaft-shaped material 60 is spherodized for spheroidize-annealing so as to form an annealed shaft-shaped material 61 (refer to Fig. 5(B)). In this annealed shaft-shaped material 61, the ductility of material itself is enhanced.

### <2. Coating treatment step (Fig. 5(C))>

Next, in the coating treatment step, a coat of lubricant 36 is applied on the surface of the annealed shaft-shaped material 61 so as to form a coated shaft-shaped material 62 (refer to Fig. 5(C)).

For example, the surface of the annealed shaft-shaped material 61 is coated with phosphate as a lubricant to thereby form a coat of lubricant (a coat of phosphate) 36, whereby a coated shaft-shaped material 62 is formed.

By forming the coat of lubricant 36 on the surface of the coated shaft-shaped material 62, a frictional force generated between cold forging molds and the coated shaft-shaped material (the material) during cold forging is reduced.

In this way, the coated shaft-shaped material 62 which has been subjected to the annealing treatment step and the coating treatment step becomes a material having superior cold forging properties.

### <3. Cold forging step (Figs. 5(D), 5(E))>

The cold forging step which follows the previous two steps includes a primary cold forging step and a secondary cold forging step.

In the primary cold forging step, the coated shaft-shaped material 62 is extruded forwards by employing a forging mold system (whose illustration is omitted) for forward extrusion in cold forging to thereby define outside diameters of a shaft portion 10 (including a large-diameter shaft portion 11, a small-diameter shaft portion 12, a shaft end portion 15), an intermediate shaft portion (a flange base portion 20 and part of a fitting shaft portion 30) 23 and a fitting shaft portion 30, whereby a primary cold forged part 63 is prepared through the forward extrusion in cold forging (refer to Fig. 5(D)).

In the secondary cold forging step, a plurality of flange portions 21 are formed in a radial direction on an outer circumferential surface of the intermediate shaft portion 23 (the flange base portion 20) which is situated between the shaft portion 10 and the fitting shaft portion 30 while forming a forged recess portion 35 in an end face of a central portion of the fitting shaft portion 30 of the primary cold forged part 63 by employing a forging mold system (refer to Fig. 6(A)) for sideways extrusion in cold forging, whereby a secondary cold forged part 64 is formed (refer to Fig. 5(E)).

### <4. Cutting step (Fig. 5(G))>

In the cutting step, part of the secondary cold forged part 64, for example, rotor supporting surfaces 22 which constitute one side surface of the flange portions 21 and an end face 33 of the fitting shaft portion 30 are cut as required, and bolt holes 24 are opened in the flange portions 21, whereby a cut forged part 66 is formed (refer to Fig. 5(G)).

In this cutting step, at least the coat of lubricant 36 at a wheel fitting portion 32 (refer to Fig. 4) of the fitting portion 30 of the secondary forged part 64 should not be cut to remain applied.

In addition, in this embodiment, as shown in Fig.4, the coat of lubricant 36 should not also be cut to remain applied on surfaces of the flange portions 21 which lie opposite to the rotor supporting surfaces 22, a seal surface 19 which is formed adjacent to a shoulder portion of a first inner ring raceway surface 18 (corresponding to an adjacent outer circumferential surface), a surface of the forged recess portion 35, and an end face of the shaft end portion 15 at a distal end of the small-diameter portion 12 of the shaft portion 10. Additionally, the range to be cut is reduced by such an extent that the coat of lubricant 36 is left applied, whereby the cutting process is facilitated, reducing the cutting time.

### <5. Heat treatment step (Fig. 5(H))>

Next, in the heat treatment step (the hardening and tempering step), the first inner ring raceway surface 18 of the shaft portion 10 of the cut forged part 66 is hardened by induction hardening and is thereafter tempered to thereby form a heat treated forged part 67 (refer to Fig. 5(H)). In this case, the seal surface 19, an outer circumferential surface of the small-diameter portion 12 and an inner ring abutment surface 12a are intentionally not subjected to hardening by induction hardening (refer to Fig. 4). By doing so, the time spent performing the heat treatment step can be reduced. It is noticed that a hardened layer S is formed on the periphery of the first inner ring raceway surface 18 as a result of being hardened and tempered as shown in Fig. 4.

### <6. Polishing step>

In the polishing step, the first inner ring raceway surface 18 of the heat treated forged part 67 is polished to thereby form the shaft member 1 (refer to Fig. 4).

Next, a production method will be described of producing the rolling bearing device A by the use of the shaft member 1 produced through the steps described above.

In the production method which will be described below, the rolling bearing device A is produced through an outer ring assembling step, an inner ring assembling step, and a crimping step.

### <7. Outer ring assembling step>

In the outer ring assembling step, the outer ring 45 which includes the plurality of first rolling elements 50 (including the cage 52) and the seal member 56 is fitted on from the shaft end portion 15 of the shaft member 1 on which the polishing step has been completed (an end portion of the small-diameter shaft portion 12). When the outer ring 45 is fitted on, the first rolling elements 50 are held so as to roll between the first inner ring raceway surface 18 which is formed on an outer circumferential surface of the large-diameter shaft portion 11 and the first outer ring raceway surface 46 which is formed on the inner circumferential surface of the outer ring 45.

### <8. Inner ring assembling step>

In the inner ring assembling step, the inner ring 42 which includes the plurality of second rolling elements 51 (including the cage 53) is fitted on from the shaft end portion 15 of the shaft member 1 on which the polishing step has been completed until the inner ring 42 comes into abutment with the inner ring abutment surface 12a. When the inner ring 42 is fitted on, the second rolling elements 51 are held so as to roll between the second inner ring raceway surface 44 which is formed on the outer circumferential surface of the inner ring 42 and the second outer ring raceway surface 47 which is formed on the inner circumferential surface of the outer ring 45.

### <9. Crimping step>

In the crimping step, a crimping jig is pressed against the shaft end portion 15 of the shaft member 1 on which the inner ring assembling step has been completed along the rotational axis of the shaft portion 10. Then, the crimping jig is caused to oscillate to plastically deform the shaft end portion 15 so that the shaft end portion 15 is expanded diametrically in a radially outward direction. Thereafter, the crimping jig is stopped oscillating but is caused to hold its pressure for a predetermined period of time to thereby form a crimped portion 17. By dosing so, an end face of the crimped portion 17 (a surface which is at right angles to the rotational axis of the shaft portion 10) becomes flat.

In the rolling bearing device production method that has been described heretofore, as described above, in the annealing treatment step of annealing the shaft member, the structural carbon steel such as S45C, S50C, or S55C is heated at the temperature equal to or higher than the transformation temperature to form the annealed shaft-shaped material 61. Then, in the following coating treatment step, the coat of lubricant 36 is applied to the surface of the annealed shaft-shaped material 61 which reduces the frictional force generated between the cold forging molds and the material to thereby form the coated shaft-shaped material 62, which is then imparted superior forging properties.

Through these steps, the shaft end portion 15 can easily be crimped even though it is formed into the solid cylindrical configuration, and hence the shaft end portion 15 does not have to be formed into a hollow cylindrical configuration. Thus, molds for forming a hollow cylindrical shaft portion and a cutting step involved therein become unnecessary.

### <Mold configuration for molds used in secondary cold forging step (Fig. 6)>

Next, configurations of molds of a cold forging mold system used in the secondary cold forging step will be described by the use of Figs. 6(A) and 6(B).

Fig. 6(A) shows a sectional view (a sectional view corresponding to the section taken along the line II-II in Fig. 2(A)) of a state in which the secondary cold forged part 64 is formed by the use of a first mold K1 to a sixth mold K6 which make up the forging mold system. Fig. 6(B) shows an enlarged view of a boundary portion of the first mold K1 and the second mold K2 of this embodiment (the vicinity of a recess portion which corresponds to the projecting portion M). Fig. 6(C) shows an enlarged view of a boundary portion between a conventional first mold K101 and a conventional second mold K102 which does not have a recess portion which corresponds to the projecting portion M.

As shown in Fig. 6(B), a recess portion for forming the projecting portion M shown in Figs. 2(A), 3(A), 3(B) is formed in the boundary portion between the first mold K1 and the second mold K2.

As has been described by the use of Figs. 2(A), 3(A) and 3(B), the projecting portion M can increase the rigidity and strength of the flange portions 21 of the shaft member 1.

The recess portion for forming the projecting portion M which is formed in the first mold K1 and the second mold K2 also contributes to extending the life of the second mold K2 in addition to the formation of the projecting portion M on the shaft member 1.

The recess portion for forming the projecting portion M is not formed in the conventional first mold K101 and the conventional second mold K102 which are shown in Fig. 6(C). In this case, when performing a sideways extrusion by pushing the third mold K3 in the secondary cold forging step, in a secondary cold forged part (102), a material which flows in directions indicated by arrows in the secondary cold forged part

(102) in Fig. 6(C) is interrupted at a portion where a boundary portion N (a boundary portion between the shaft portion and the flange base portion) is provided, which causes stress to concentrate to this boundary portion N, whereby the life of the conventional second mold K102 is short.

In contrast with this, at the first mold K1 and the second mold K2 of this embodiment shown in Fig. 6(B), the recess portion for forming the projecting portion M is formed in a position which is spaced away from the boundary portion N and which lies closer to the fitting shaft portion 30 than the boundary portion N. In this case, when performing a sideways extrusion by pushing the third mold K3 in the secondary cold forging step, in a secondary cold forged part (64), a material which flows in directions indicated by arrows in the secondary cold forged part (64) in Fig. 6(B) is interrupted at the portion where the boundary portion N is provided and the portion where the projecting portion is formed. In other words, due to an increase in the number of portions where the flow of the material is interrupted, the stress is dispersed, thereby making it possible to extend the life of the second mold K2.

Namely, by providing the projecting portion M on the shaft member 1, not only can the rigidity and strength of the flange portions 21 be increased, but also the life of the mold can be extended, thereby making it possible to reduce the projection costs.

The shaft member 1 of the invention is not limited to the projection method including the treatments and the processing steps, the external appearance, the configuration and the construction which are described in this embodiment, and hence, various modifications, additions or deletions can be made without departing from the spirit and scope of the invention.

Additionally, numerical values used in the description of this embodiment are only examples, and hence, the invention is not limited to these numeric values described.

In addition, such expressions as equal to or larger than (≥), equal to or smaller than (≤), larger than (>) and smaller than (<) may or may not include an equality sign.

In addition, in the shaft member according to this embodiment, the projecting portion is preferably formed in the position which is spaced away from the boundary portion between the shaft portion and the flange base portion and which lies closer to the fitting shaft portion than the boundary portion in the direction of the rotational axis.

According to this configuration, the recess portion which corresponds to the projecting portion (refer to the projecting portion M in Fig. 6(B)) which additionally interrupts the flow of the material is provided in the position which lies in the vicinity of the boundary portion (refer to the boundary portion N in Fig. 6(B)) which interrupts the flow of the material and which is different from the position where the boundary portion is provided. Thus, the stress applied by the material is distributed to the boundary portion and the projecting portion.

The life of the mold can be extended by the distribution of the stress in the way described above.

### DESCRIPTION OF REFERENCE NUMERALS

1 shaft member of rolling bearing device for wheel; 10 shaft portion; 11 large-diameter portion of shaft portion; 12 small-diameter portion of shaft portion; 12a inner ring abutment surface; 15 end shaft portion of shaft portion; 15C center of crimped surface; 15M crimped surface; 17 crimped portion; 18 first inner ring raceway surface; 19 seal surface (adjacent outer circumferential surface); 20 flange base portion; 21 flange portion; 23 intermediate shaft portion; 30 fitting shaft portion; 36 coat of lubricant; 42 inner ring; 44 second inner ring raceway surface; 45 outer ring; 46 first outer ring raceway surface; 47 second outer ring raceway surface; 50 first rolling element; 51 second rolling element; A rolling bearing device for wheel; K1 to K6 first to sixth molds; L1, L2 projecting length; M projecting portion; N boundary portion; ZC rotational axis.

## Claims

1. A shaft member for a rolling bearing device for a wheel, the shaft member comprising:
a shaft portion which is substantially cylindrical and on an outer circumferential surface of which an inner ring raceway surface is formed;
a flange base portion which is substantially cylindrical and formed at one end side of the shaft portion so as to be concentric with a rotational axis of the shaft portion, wherein the flange base portion is larger in diameter than a diameter of the shaft portion;
a fitting shaft portion which is substantially cylindrical and formed on a side of the flange base portion which is opposite to the shaft portion so as to be concentric with the rotational axis of the shaft portion, wherein the fitting shaft portion is substantially equal in diameter to the flange base portion or smaller in diameter than the flange base portion;
a plurality of flange portions which extend radially outwards in a radial direction from the flange base portion; and
projecting portions which are webbed-shaped and formed circumferentially on an outer circumferential surface of the flange base portion in positions between the adjacent flange portions so as to project radially outwards from the outer circumferential surface of the flange base portion.

2. The shaft member for the rolling bearing device according to claim 1, wherein each of the projecting portions is formed in a position which is deviated from a boundary portion between the shaft portion and the flange base portion and which is situated closer to the fitting shaft portion than the boundary portion in a direction of the rotational axis.
